# EUROPEAN PATENT APPLICATION

(11) **EP 4 407 208 A1**
(43) Date of publication of application: **31.07.2024**
(21) Application number: 24153670.5
(22) Date of filing: 24.01.2024
(51) Int. Cl.: F16F 9/44, F16F 9/46, F16F 9/06

(54) **LIVE VALVE ASSEMBLY**

(30) Priority: 24.01.2023 US 202363440783 P; 23.01.2024 US 202418420623
(71) Applicant: Fox Factory, Inc., Duluth, GA 30097 (US)
(72) Inventor: Ericksen, Everet Owen, Duluth, 30097 (US)
(74) Representative: Greaves Brewster LLP

(57) **Abstract**

A live valve assembly (80) comprising:
an active valve (302) within a first fluid pathway (351) between a damping chamber (325) and a reservoir (310), said active valve configured to enable or prevent a fluid flow through said first fluid pathway (351); and
a poppet (305) distinctly separate from said active valve (302), said poppet disposed in a second fluid pathway (315) between said damping chamber (325) and said reservoir (310), said second fluid pathway (315) larger than said first fluid pathway (351) and does not traverse said active valve (302), wherein said active valve is configured to close said first fluid pathway (351) and cause a fluid pressure increase to act against a portion of said poppet (305) to cause said poppet to close said second fluid pathway (315).

## Description

### CROSS-REFERENCE TO RELATED APPLICATIONS

This application claims priority from U.S. Provisional Patent Application No. 63/440,783 filed on January 24, 2023, and from U.S Patent Application No. 18/420,623 filed January 23, 2024.

### TECHNICAL FIELD

Embodiments of this invention relate to a live valve assembly, to a shock assembly comprising the live valve assembly, to a vehicle comprising the live valve assembly, to a vehicle comprising the shock assembly, and to a suspension-inclusive device comprising the live valve assembly. Some embodiments of the invention generally relate to a live valve for a shock assembly.

### BACKGROUND

Shock assemblies are used in numerous different vehicles, devices, or the like and configurations to absorb some or all of a movement that is received at a first portion of a vehicle, device, or the like before it is transmitted to a second portion of the vehicle, device, or the like. For example, when a front wheel of a vehicle hits a rough spot, the encounter will cause an impact force on the wheel. By utilizing suspension components including one or more shock assemblies, the impact force can be significantly reduced or even absorbed completely by the suspension before it is transmitted to a suspended portion of the vehicle.

However, there are times of operation when a suspension modification is helpful. For example, when moving from a paved road surface (e.g., a hard and relatively smooth surface) to other types of terrain (e.g., softer, less smooth, looser type surfaces, etc.), performance is often enhanced if the damping characteristics of the shock assembly are softened. Conversely, when moving from non-paved surfaces to paved surfaces, performance is often enhanced if the damping characteristics of the shock assembly are firmed. Similar, shock assembly characteristic modifications add performance value for parts (or different aspects) of an outing, such as but not limited to, breaking, accelerations, bursts of power and/or speed, event encounters (e.g., rocks, hills, bumps, jumps, holes, ruts, curbs, roots, etc.).

### SUMMARY OF THE INVENTION

According to some embodiments there is provided a valve assembly. The valve assembly may be a live valve assembly. The live valve assembly may comprise an active valve. The active valve may be within a first fluid pathway between a damping chamber and a reservoir. The active valve may be configured to enable or prevent a fluid flow through said first fluid pathway. The live valve assembly may comprise a poppet distinctly separate from said active valve. The poppet may be disposed in a second fluid pathway between said damping chamber and said reservoir. The second fluid pathway may be larger than said first fluid pathway. The second fluid pathway may not traverse said active valve. The active valve may be configured to close said first fluid pathway and cause a fluid pressure increase to act against a portion of said poppet to cause said poppet to close said second fluid pathway.

In some embodiments the first fluid pathway and said second fluid pathway may be in a body cap of a shock assembly.

In some embodiments the poppet may comprise a control orifice through said poppet. In use a pressure area on a backside of said poppet may larger than an inlet area of said control orifice.

In some embodiments the first fluid pathway may traverse said control orifice of said poppet.

In some embodiments the second fluid pathway may not traverse said control orifice of said poppet.

In some embodiments the poppet may comprise a sealing feature to seal said poppet with respect to a fluid chamber of said first fluid pathway.

In some embodiments the live valve assembly may further comprise a spring to provide a closing force against said poppet.

In some embodiments the closing force may be selected from a group consisting of: a Bernoulli effect and a parasitic friction.

According to some embodiments there is provided a shock assembly. The shock assembly may comprise a body comprising a chamber with a working fluid therein. The shock assembly may comprise a piston coupled with a shaft, said piston disposed in said chamber and axially movable relative to said chamber, said piston separating said chamber into a compression side and a rebound side. The shock assembly may comprise a body cap. The body cap may comprise a first fluid pathway between a damping chamber and a reservoir. The body cap may comprise a second fluid pathway between said damping chamber and said reservoir. The second fluid pathway may be larger than said first fluid pathway. The shock assembly may comprise a valve assembly. The valve assembly may comprise a live valve assembly. The live valve assembly may comprise an active valve within said first fluid pathway. The active valve may be configured to enable or prevent a fluid flow through said first fluid pathway, The live valve assembly may comprise a poppet disposed in said second fluid pathway and distinctly separate from said active valve. The active valve may be configured to close said first fluid pathway and cause a fluid pressure increase to act against a portion of said poppet to cause said poppet to close said second fluid pathway.

In some embodiments the second fluid pathway may not traverse said active valve.

In some embodiments the poppet may comprise a control orifice through said poppet. A pressure area on a backside of said poppet may be larger than an inlet area of said control orifice.

In some embodiments the first fluid pathway may traverse said control orifice of said poppet.

In some embodiments the second fluid pathway may not traverse said control orifice of said poppet.

In some embodiments the poppet may comprise a sealing feature to seal said poppet with respect to a fluid chamber of said first fluid pathway.

In some embodiments the shock assembly may further comprise a spring to provide a closing force against said poppet.

In some embodiments the closing force may be selected from a group consisting of: a Bernoulli effect and a parasitic friction.

According to some embodiments there is provided a live valve shock assembly. The live valve shock assembly may comprise a body comprising a chamber with a working fluid therein. The live valve shock assembly may comprise a piston coupled with a shaft, said piston disposed in said chamber and axially movable relative to said chamber, said piston separating said chamber into a compression side and a rebound side. The live valve shock assembly may comprise a body cap. The body cap may comprise a first fluid pathway between a damping chamber and a reservoir. The body cap may comprise a second fluid pathway between said damping chamber and said reservoir. The second fluid pathway may be larger than said first fluid pathway. The body cap may comprise an active valve within said first fluid pathway. The active valve may be configured to enable or prevent a fluid flow through said first fluid pathway. The body cap may comprise a poppet disposed in said second fluid pathway and distinctly separate from said active valve. The active valve may be configured to close said first fluid pathway and cause a fluid pressure increase to act against a portion of said poppet to cause said poppet to close said second fluid pathway.

In some embodiments the poppet may comprise a control orifice through said poppet. A pressure area on a backside of said poppet may be larger than an inlet area of said control orifice. The first fluid pathway may traverse said control orifice of said poppet.

In some embodiments the second fluid pathway may not traverse said control orifice of said poppet or said active valve.

In some embodiments the live valve shock assembly may further comprise a sealing feature to seal said poppet with respect to a fluid chamber of said first fluid pathway. The live valve shock assembly may further comprise a spring to provide a closing force against said poppet. The closing force may be selected from a group consisting of: a Bernoulli effect and a parasitic friction.

According to some embodiments there is provided a valve. The valve may comprise a solenoid to enable to prevent fluid flow between a manifold and an external reservoir. The valve may comprise a direct chamber that enables fluid flow between the manifold and the external reservoir without fluid going through the solenoid. The valve may comprise a pressure balanced poppet. The poppet may be disposed to allow or block fluid flow through the direct chamber. When the pressure balanced poppet opens to allow flow through the direct chamber there may be no pressure drop.

According to some embodiments there is provided a vehicle comprising a live valve assembly as set out above, or as described or as claimed anywhere herein.

In some embodiments there is provided a vehicle comprising a shock assembly as set out above, or as described or as claimed anywhere herein.

In some embodiments the vehicle may comprise a bicycle, an electric bike (e-bike), a hybrid bike, a scooter, a motorcycle, an ATV, a personal water craft (PWC), a vehicle with three or more wheels, such as a utility vehicle (UTV) such as a side-by-side, a car, truck, a snow machine, an aircraft.

According to some embodiments there is provided a suspension inclusive device comprising a live valve assembly as set out above, or as described or as claimed anywhere herein.

In some embodiments the suspension-inclusive device may comprise an exoskeleton, a seat frame, a prosthetic, or a suspended floor.

Throughout the description and claims of this specification, the words "comprise" and "contain" and variations of the words, for example "comprising" and "comprises", mean "including but not limited to", and do not exclude other components, integers or steps. Moreover the singular encompasses the plural unless the context otherwise requires: in particular, where the indefinite article is used, the specification is to be understood as contemplating plurality as well as singularity, unless the context requires otherwise.

Preferred features of each aspect of the invention may be as described in connection with any of the other aspects. Within the scope of this application it is expressly intended that the various aspects, embodiments, examples and alternatives set out in the preceding paragraphs, in the claims and/or in the following description and drawings, and in particular the individual features thereof, may be taken independently or in any combination. That is, all embodiments and/or features of any embodiment can be combined in any way and/or combination, unless such features are incompatible.

### BRIEF DESCRIPTION OF THE DRAWINGS

Aspects of the present invention are illustrated by way of example, and not by way of limitation, in the accompanying drawings, wherein:
Figure 1A is a perspective view of a shock assembly with a live valve poppet, in accordance with an embodiment.
Figure 1B is a perspective view of a portion of the shock assembly of Figure 1A showing a manually actuated lever, in accordance with an embodiment.
Figure 2 is a cross-section of a conventional valving for an external reservoir, in accordance with an embodiment.
Figure 3 is a cross-section view of a portion of the shock assembly including the live valve in an open spool state, in accordance with an embodiment.
Figure 4 is a cross-section view of a portion of the shock assembly including the live valve in a closed spool state, in accordance with an embodiment.

The drawings referred to in this description should be understood as not being drawn to scale except if specifically noted.

### DETAILED DESCRIPTION

The detailed description set forth below in connection with the appended drawings is intended as a description of various embodiments of the present invention and is not intended to represent the only embodiments in which the present invention is to be practiced. Each embodiment described in this disclosure is provided merely as an example or illustration of the present invention, and should not necessarily be construed as preferred or advantageous over other embodiments. In some instances, well known methods, procedures, and objects have not been described in detail as not to unnecessarily obscure aspects of the present disclosure.

### Terminology

In the following discussion, a number of terms and directional language is utilized. It should be appreciated that the shock assembly described herein can be used with a number of different suspension systems that use one or more shock assemblies. Examples of applications include one or more shock assemblies on vehicles such as, but not limited to a bicycle, an electric bike (e-bike), a hybrid bike, a scooter, a motorcycle, an ATV, a personal water craft (PWC), a vehicle with three or more wheels (e.g., a UTV such as a side-by-side, a car, truck, etc.), a snow machine, an aircraft, and the like. In one embodiment, the shock assembly disclosed herein is also suited for use in one or more shock assemblies of a suspension inclusive device such as, but not limited to, an exoskeleton, a seat frame, a prosthetic, a suspended floor, and the like.

In general, a suspension system provides a motion modifiable connection between a component that is in contact with a surface (e.g., an unsprung portion) and some or all of the rest of the device that is not in contact with the surface (e.g., a suspended portion).

For example, in a suspension system for a vehicle, the unsprung portion of the vehicle that is in contact with the surface can include one or more wheel(s), skis, tracks, hulls, etc., while some or all of the rest of the vehicle that is not in contact with the surface include suspended portions such as a frame, a seat, handlebars, engines, cranks, etc.

The suspension system will include one or numerous components which are used to couple the unsprung portion of the vehicle (e.g., wheels, skids, wings, belt, etc.) with the suspended portion of the vehicle (e.g., seat, cockpit, passenger area, cargo area, etc.). Often, the suspension system will include one or more shock assemblies which are used to reduce feedback from the unsprung portion of the vehicle before that feedback is transferred to the suspended portion of the vehicle, as the vehicle traverses an environment. However, the language used by those of ordinary skill in the art to identify a shock assembly used by the suspension system can differ while referring to the same (or similar) types of components. For example, some of those of ordinary skill in the art will refer to the shock assembly as a shock absorber, while others of ordinary skill in the art will refer to the shock assembly as a damper (or damper assembly).

The shock assembly often consists of a (damping) piston and piston rod telescopically mounted in a fluid filled cylinder (e.g., a housing). The fluid (e.g., damping fluid, working fluid, etc.) may be, for example, a hydraulic oil, a gas such as nitrogen, air, or the like. In one embodiment, the shock assembly will include a mechanical spring (e.g., a helically wound spring that surrounds or is mounted in parallel with the body of the shock assembly). In one embodiment, the shock assembly will include an air spring. In one embodiment, the shock assembly will include both a mechanical spring and an air spring.

As utilization scenarios change, one or more shock assemblies of the suspension system can be adjusted for different performance characteristics based on aspects such as vehicle type, terrain, purpose (e.g., rock crawl, normal use, race set-up, hill climb, etc.), and the like. For example, a rugged terrain vehicle, e.g., mountain bike, motocross bike, off-road truck, side-by-side, snow machine, etc.) would want a suspension configuration with a large range of motion and aggressive rebound and compression speeds to maintain as much contact as possible between the tires and the ground by absorbing the terrain events such as bumps, ruts, roots, rocks, dips, etc. while reducing the impacts felt at the suspended portion and also have the suspension return to its personal sag setting as quickly as possible in preparation for the next encounter.

In contrast, a vehicle used in relatively flat (or smooth terrain) and at higher performance speeds, would use a firmer suspension configuration with a very small range of motion to provide feel for the grip of the tire, maintain friction and/or aerodynamic geometries, and the like in order to obtain its maximum performance.

In one embodiment, there may be times where changes to a suspension component are desired during a given ride/drive. For example, a bike rider in a sprinting scenario would often want to firm up or possibly even lockout the suspension component to remove rider induced pedal bob. Similarly, a user of a snowmobile (or other rear-suspended vehicle) would often want to firm up and even lockout the suspension component coupled with the rear track to traverse deep snow (or sand, gravel, etc.), to main the connection between the terrain and the tread (or other drive component).

With respect to the term lockout, for purposes of the following discussion, lockout refers to the most restricted flow state attainable or desirable. Thus, in one embodiment, lockout refers to a stoppage of all fluid flow through a given flow path. However, in another embodiment, lockout does not stop all the fluid flow through a given flow path. For example, a manufactured component may not be able to stop all fluid flow due to tolerances, or a manufacturer (designer, etc.) may not want to stop all fluid flow for reasons such as lubrication, cooling, etc. Similarly, a lockout state could be a "perceived lockout"; that is, the flow area through a flow path of the adjustable shock assembly has been reduced to a minimum size for a given adjustable shock assembly, machine, environment, speed, performance requirement, etc. For example, in one "perceived lockout" most, but not all, of the fluid flow is minimized while in another "perceived lockout" the fluid flow is reduced by only half (or a third, quarter, three-quarters, or the like). Additional details regarding shock assembly lockout is found in US Patent 11,162,555 to which reference is specifically made.

The term "active", as used when referring to a valve or shock assembly component, means adjustable, manipulatable, etc., during typical operation of the valve. For example, an active valve can have its operation changed to thereby alter a corresponding shock assembly characteristic damping from a "soft" setting to a "firm" setting (or a stiffness setting somewhere therebetween) by, for example, adjusting a switch in a passenger compartment of a vehicle, device, or the like. Additionally, it will be understood that in some embodiments, an active valve may also be configured to automatically adjust its operation, and corresponding shock assembly damping characteristics, based upon, for example, operational information pertaining to the vehicle, device, or the like and/or the suspension with which the valve is used.

Similarly, it will be understood that in some embodiments, an active valve may be configured to automatically adjust its operation, and corresponding shock assembly damping characteristics, based upon received user input settings (e.g., a user-selected "comfort" setting, a user-selected "sport" setting, and the like). In many instances, an "active" valve is adjusted or manipulated electronically (e.g., using a powered solenoid, electric motor, poppet, or the like) to alter the operation or characteristics of a valve and/or other component. As a result, in the field of suspension components and valves, the terms "active", "electronic", "electronically controlled", and the like, are often used interchangeably.

The term "manual" as used when referring to a valve or shock assembly component means manually adjustable, physically manipulatable, etc., without requiring disassembly of the valve, damping component, or shock assembly which includes the valve or damping component. In some instances, the manual adjustment or physical manipulation of the valve, damping component, or shock assembly which includes the valve or damping component, occurs when the valve is in use. For example, a manual valve may be adjusted to change its operation to alter a corresponding shock assembly damping characteristic from a "soft" setting to a "firm" setting (or a stiffness setting somewhere therebetween) by, for example, manually rotating a knob, pushing or pulling a lever, physically manipulating an air pressure control feature, manually operating a cable assembly, physically engaging a hydraulic unit, and the like. For purposes of the present discussion, such instances of manual adjustment/physical manipulation of the valve or component can occur before, during, and/or after "typical operation of the device".

It should further be understood that a suspension system may also be referred to using one or more of the terms "passive", "active", "semi-active" or "adaptive". As is typically used in the suspension art, the term "active suspension" refers to a suspension which controls the vertical movement. Moreover, "active suspensions" are conventionally defined as either a "pure active suspension" or a "semi-active suspension" (a "semi-active suspension" is also sometimes referred to as an "adaptive suspension"). In a conventional "pure active suspension", a motive source such as, for example, an actuator, is used to move (e.g. raise or lower) a wheel with respect to the vehicle. In a "semi-active suspension", no motive force/actuator is employed to adjust move (e.g. raise or lower) a wheel with respect to the vehicle.

Rather, in a "semi-active suspension", the characteristics of the suspension (e.g. the firmness of the suspension) are altered during typical use to accommodate conditions of the terrain and/or the vehicle. Additionally, the term "passive suspension", refers to a suspension in which the characteristics of the suspension are not changeable during typical use. For example, no motive force/actuator is employed to adjust (e.g. raise or lower) the height of a wheel with respect to the vehicle. As such, it will be understood that an "active valve", as defined above, is well suited for use in a "pure active suspension" or a "semi-active suspension".

In the following discussion, one or more of the component of the shock assembly may be active and/or semi-active (referred to herein as "live"). In general, a live component will have one or more electronically adjustable features controlled by a motive component such as a solenoid, stepper motor, electric motor, or the like. In operation, the live component will receive an input command which will cause the motive component to move, modify, or otherwise change one or more aspects of one or more electronically adjustable features.

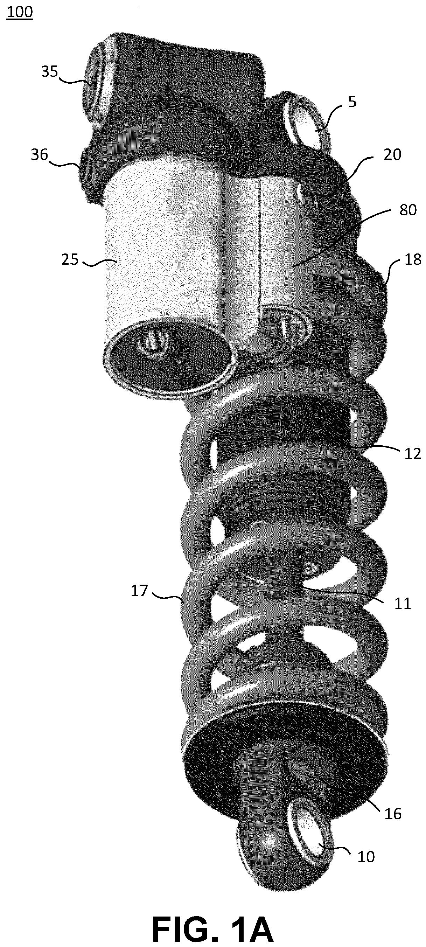

Referring now to Figure 1A, a perspective view of a shock assembly 100 with a live valve poppet assembly 80 is shown in accordance with an embodiment. In one embodiment, shock assembly 100 is a coil-over shock assembly, such as, for example, a FOX DHX2 shock assembly with a velocity-sensitive shimmed damping system, one or more coil-over springs 17, a spring preload adjuster 18, and a fluid reservoir 25.

In one embodiment, coil-over spring 17 provides an expansive (e.g., spring) force on the shock assembly 100. In one embodiment, shock assembly 100 includes a piston assembly coupled with the shaft 11, where the piston is located somewhere within the main chamber of body 12. In one embodiment, when installed, the resting sag length of the mounted shock assembly 100 is maintained in compression by the weight of the body it is suspending (e.g., the sprung portion of the vehicle), and in expansion by the "spring" force produced by the expansion component (e.g., coil-over spring 17).

Although in one embodiment the shock assembly 100 is described as coil-over style shock assembly. In another embodiment, the shock assembly 100 is a FOX load optimizing air technology (FLOAT) air shock assembly. In general, an air shock assembly is a highperformance shock assembly that use air as springs, instead of heavy steel coil springs or expensive titanium coil springs. In another embodiment, the shock assembly 100 may be another type of shock assembly such as, but not limited to, a stand-alone fluid damper assembly, an air sprung fluid damper assembly, a twin-tube shock assembly, or the like. In one embodiment, fluid reservoir 25 is a remote fluid reservoir.

In general, shock assembly 100 includes attachment features such as, in one embodiment, a chassis mount (e.g., upper eyelet 5) and a frame mount (e.g., lower eyelet 10) which allow shock assembly 100 to be coupled between the unsprung portion of the suspension (e.g., the components of the suspension affected by, or in contact with, the terrain) and the sprung portion. In one embodiment, if the shock assembly 100 is installed in an inverted configuration, upper eyelet 5 would be a frame mount and lower eyelet 10 would be the chassis mount.

In one embodiment, shock assembly 100 includes body 12, a body cap 20, and a fluid reservoir 25 fluidly coupled with the body 12.

A configuration of an external and/or side fluid reservoir 25, including a floating piston, is described in U.S. Pat. No. 7,374,028 to which reference is specifically made.

In one embodiment, shock assembly 100 optionally includes one or more of a manually adjustable high speed and/or low speed compression adjuster 35 and/or a manually adjustable high speed rebound adjuster 16 and/or low speed rebound adjuster 36.

In general, second fluid circuit adjustments (or high-speed compression (HSC) adjustments) are useful to control shock performance during bigger hits, landings, and square-edged bumps; while first fluid circuit adjustments (or low-speed compression (LSC) adjustment) are useful to control shock performance during rider weight shifts, G-outs, and other slow inputs. Low-speed rebound (LSR) adjustment is useful to control shock performance during brake bumps, technical climbing, and off-camber cornering, when extra traction is needed; while high-speed rebound (HSR) adjustment is useful to allow the shock to recover from bigger hits and square-edged bumps quickly enough to absorb consecutive hits.

Often, the first fluid circuit is utilized as part of the sag setup of the vehicle. Once the first fluid circuit is set, it is usually not necessary to adjust the first fluid circuit during a ride. However, there are times when being able to close and/or adjust a flow of the first fluid circuit is valuable. For example, during a bouncing part of a ride (e.g., rider standing up and pedaling, vehicle traversing rolling bumpy terrain, whoops, etc.) the first fluid circuit can allow some of the force being provided to the drive wheel(s) to be deleteriously dissipated by the shock assembly.

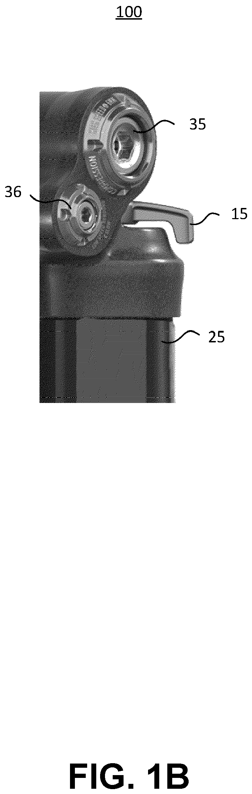

With reference now to Figure 1B, a perspective view of a portion of the shock assembly 100 of Figure 1A showing a manually actuated lever 15. In one embodiment, lever 15 is a 2-position lever. In general, lever 15 is used to make on-the-fly adjustments to control shock performance, and is able to be adjusted throughout the ride. In one embodiment, the positions are "open" and "firm". The open position does not affect the HSC/LSC, preset high- and low-speed compression settings. In contrast, when the lever 15 is in the firm position, the shock assembly 100 is basically in lockout such that it will have very firm low-speed compression setting, e.g., useful for riding elements like climbing and sprinting.

For example, when a rider is riding a bicycle on dirt, gravel, or other loose/slippery terrain, and the rider is standing on the pedals (e.g., starting, sprint, hill ascent, etc.) instead of all of the rider's input being translated to drive wheel output, the shock assembly can absorb some of the energy provided to the pedals resulting in what is known as pedal bob. The pedal bob will cause the vehicle to be heavier and lighter with respect to the ground as the rider pedals (e.g., the shock assembly will compress and rebound through the pedal bob). As the shock assembly compresses and rebounds, and the force of the drive wheel against the terrain similarly changes. As such, when there is less force pushing the drive wheel into the terrain, the drive wheel can break free of lower friction terrain causing wheel spin. This wheel spin will result in obvious loss of drive. Pedal bob will also make it difficult for the rider to pedal as the suspension compresses quickly at the start of the pedal stoke and can start to return while the rider is still performing the pedal downstroke. This upward movement of the suspension within the downstroke of the pedal motion is disrupting to both the timing and ability for the rider to find a cadence and/or rhythm while laying down power.

This situation similarly occurs if the vehicle is going over rolling bump type terrain, whoops, etc., where the shock assemblies are in a somewhat rhythmic compression and rebound cycle. Again, as the shock assemblies compress and rebound, and the force of the drive wheel(s) against the terrain similarly changes, when there is less force pushing the drive wheel(s) into the terrain, the drive wheel(s) can break free of lower friction terrain causing wheel spin. This wheel spin will result in obvious loss of drive and make it difficult for the rider to lay down power through the pedal with the suspension returning on the downstroke.

By closing the first fluid circuit, such as during a bouncing part of a ride, hill climb, etc., the characteristics of the shock assembly dominated by the first fluid circuit will basically be locked out. That is, the shock assembly will reduce or stop, for example, fluid flow through the first fluid circuit and, in so doing, reduce or remove the changes in force pushing the drive wheel into the terrain. As such, the vehicle will have reduced or no wheel spin and the rider better able to lay down consistent power with slowed pedal downstroke movement resulting in better drive efficiency.

Once the vehicle is past the hill climb or undulating terrain, the first fluid circuit is then returned to its pre-adjusted first fluid circuit ride setting with the second fluid circuit adjusted out of firm position, in one embodiment.

With reference again to Figure 1A, in one embodiment, instead of (or in addition to lever 15), shock assembly 100 includes at least one live valve poppet assembly 80 to electronically perform the position change e.g., open or firm instead of using the manual lever 15. In one embodiment, the live valve poppet assembly 80 is able to provide additional levels of modification by adjusting the amount of the fluid flow path the valve opens (or closes). In one embodiment, the at least one live valve poppet assembly 80 is a compression valve. In one embodiment, the at least one live valve poppet assembly 80 is a base valve, rebound valve, a combination of valve types, and the like.

In the midst of operation, it is possible that a user would make a setting change such as setting lever 15 to its firm setting as they were pedaling uphill (or the like) and desired the firmness of the stiffer compression setting. However, as the user crested the hill and began a descent, they may become focused on their performance, the terrain, and the like, and forget to switch the lever back to the open state, or find they need both hands on the handlebars and as such, are unable to reach down and interact with lever 15.

In one embodiment, by utilizing the live valve poppet assembly 80 to electronically perform the position change e.g., open or firm instead of using the manual lever 15, the change can be enacted by a remote switch, wirelessly, and even automatically based on sensor input, or the like.

For example, if the control switch is offset (such as located on the handlebars, steering wheel, frame, dash, or the like, the user could locate the control switch in a personalized location and use the remote switch to change the open or firm setting.

In one embodiment, instead of (or in addition to) user input, the live valve poppet assembly 80 could be in communication with a sensor, mobile device, or the like, that will provide input when the dropper seatpost is dropped, pedal pressure is increased (such as by a user standing), chain force is increased (such as during uphill or sprint conditions), an incline of a certain degree is identified, etc. In one embodiment, these sensor thresholds would provide an input that would cause the live valve poppet assembly 80 to automatically perform the position change e.g., open or firm.

In one embodiment, shock assembly 100 is part of a suspension system including one or more electronically actuated components, interactive components, and/or control features such as one or more of: a user interface, active and/or semi-active shock assemblies, a controller, one or more sensor(s), a display, a power source, smart components, and the like.

In general, the one or more sensor(s) could be used to monitor and/or measure things such as temperature, voltage, current, resistance, noise (such as when a motor is actuated, fluid flow through a flow path, engine knocks, pings, etc.), positions of one or more components of a vehicle, device, or the like (e.g., shock positions, ride height, pitch, yaw, roll, etc.), etc. In one embodiment, the one or more sensor(s) could be forward looking terrain, vibrations, bump, impact event, angular measurements, and the like.

Additional information for live valves, suspension systems, sensors, and their components as well as adjustment, modification, and/or replacement aspects including manually, semi-actively, semi-actively, and/or actively controlled aspects and wired or wireless control thereof is disclosed in U.S. Pat. Nos. 7,484,603; 8,838,335; 8,955,653; 9,303,712; 10,036,443; 10,060,499; 10,443,671; 10,576,803; and 10,737,546; reference is made to each of these documents for this addition information. Further, sensors and valves, or principles, of patents and other documents referenced herein, may be integrated one or more embodiments hereof, individually or in combination.

In one embodiment, one or a plurality of component(s) of the suspension system are also smart component(s). In one embodiment, the smart component(s) will include connective features that allow them to communicate wired or wirelessly with one or more of the electronically actuated components, interactive components, control features, and/or the like.

Although components of Figures 1A and 1B are shown in given locations in accordance with one embodiment, in other embodiments, one, some, or all of the components shown in Figures 1A and 1B are inverted, located in other locations, separated into two or more pieces and dispersed, combined into fewer pieces, etc. The use of the locations of the components as shown in Figures 1A and 1B are indicative of one embodiment, which is provided for purposes of clarity.

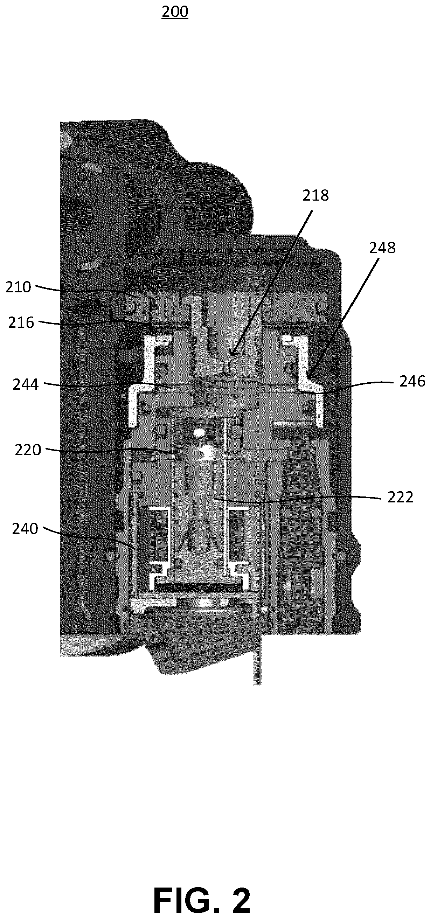

Referring now to Figure 2, a cross section of a co-located active valve 200 in an open position is shown in accordance with an embodiment. In general, it is referred to a co-located active valve as the poppet is coupled with the solenoid in a single assembly. In one embodiment, co-located active valve 200 includes vented piston 210, shims 216, control orifice 218, valve ports 220, spool 222, solenoid 240, pilot chambers 244, differential surface 246, and boost valve 248.

In general, co-located active valve 200 is used to control fluid flow between the main damping chamber (found within body 12) and the external reservoir. In one embodiment, there are two paths through which fluid can flow from the body 12 to the external reservoir 25. One path goes through the vented piston 210 and shims 216, which will open at a set pressure threshold. The second fluid flow path goes through control orifice 218, valve ports 220, and into the external reservoir 25 through a flow path on another plane (a pre-loaded pressure relief valve). In one embodiment, valve ports 220 can be blocked by spool 222, which is controlled by solenoid 240.

In one embodiment, solenoid 240 may be an active or semi active valve. In one embodiment, solenoid 240 is manually controlled. In one embodiment, a switch or lever can be used to control solenoid 240 while the vehicle is in use. In one embodiment, a cable is connected between the solenoid 240 and a switch (or the like) to allow solenoid 240 to be controlled from a remote location (e.g., a vehicle cab, bike handlebar, frame, etc.). In one embodiment, solenoid 240 is wirelessly controlled by a controller, mobile device, sensor, or the like.

When in the closed position, spool 222 will block valve ports 220 and fluid will flow through pilot chambers 244 and put pressure on the differential surface 246 of boost valve 248. The additional pressure (or pilot pressure) against the differential surface 246 will cause boost valve 248 to move up and press against shims 216. With this increased pressure, the cracking pressure of shims 216 will increase. This will put shock assembly 100 in a firm damping setting.

When spool 222 is open, shock assembly 100 is in a soft damping setting. That is, opening spool 222 will release the pilot pressure and allow boost valve 248 to move away from shims 216.

In one embodiment, spool 222 has a larger flow capacity than the upstream restrictions (e.g., control orifice 218) allow. As such, without the upstream limit that the control orifice 218 sets, enough fluid would be able to forcefully flow through pilot chambers 244 and prematurely move boost valve 248 to pre-load shims 216. Additionally, saturated flow through valve ports 220 would create a pressure drop which would also act to close boost valve 248.

One situation in which these events could occur is during high velocity impacts, which would cause discomfort for the vehicle rider as well as permanently damage the shock. As such, the control orifice is designed with a given diameter to specifically limit the flow to an appropriate level depending on the configuration of the valves in the fluid flow path.

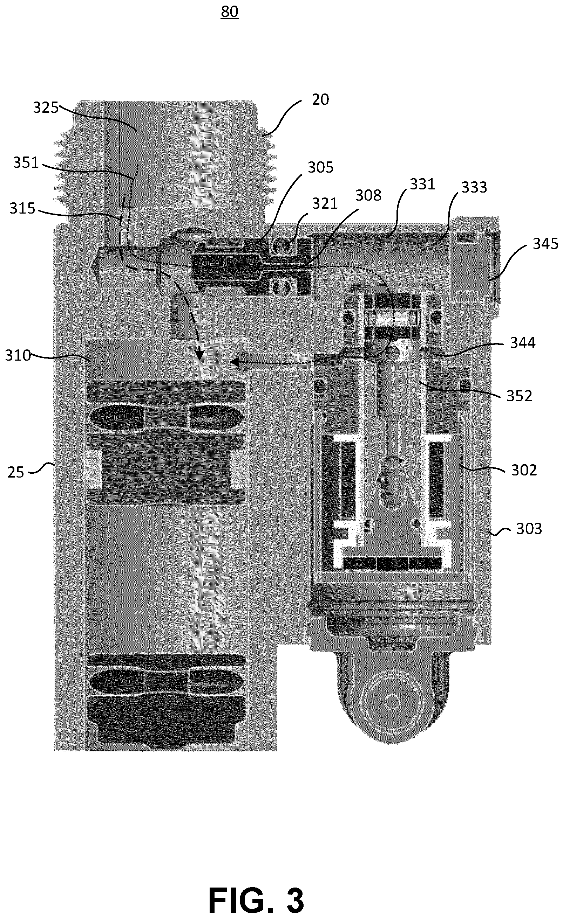

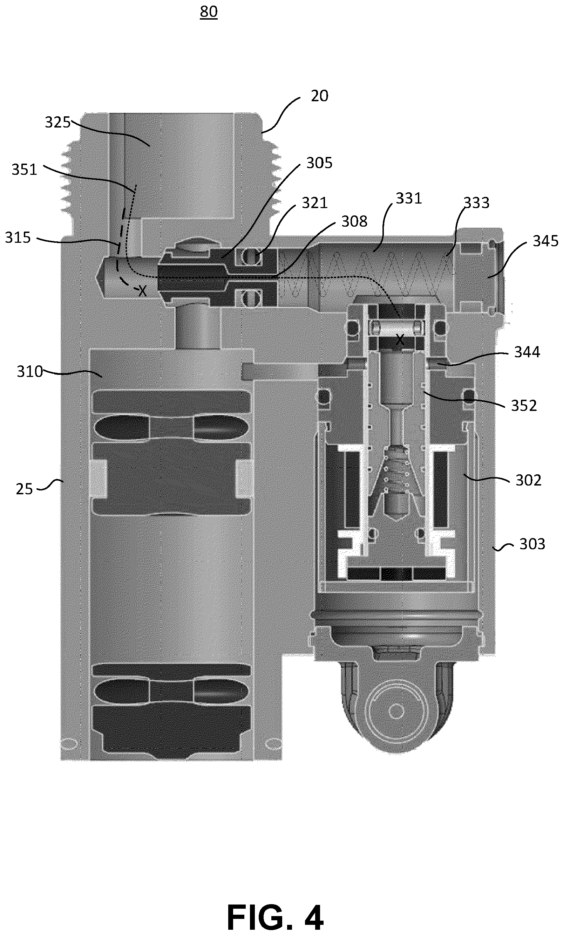

Referring now to Figure 3, a cross-section view of a portion of the shock assembly 100 including the live valve poppet assembly 80 in an open spool state is shown in accordance with an embodiment. Figure 4 is a cross-section view of a portion of the shock assembly 100 including the live valve poppet assembly 80 in a closed spool state in accordance with an embodiment. For purpose of clarity, in the discussion of Figures 3 and 4, all of the components described in Figure 1A are incorporated by reference in their entirety.

With reference now to Figures 3 and 4, the cross-sectional views show a portion of a chamber 325 within body cap 20. The chamber 325 holding a portion of the working fluid displaced from the damper chamber of body 12.

Live valve poppet assembly 80 includes a live valve 302 and a poppet 305. In one embodiment, live valve 302 is located within a housing 303 and poppet 305 is located within chamber 331 of body cap 20. In one embodiment, poppet 305 has a control orifice 308 therethrough.

The cross-sectional views also show a reservoir chamber 310 of fluid reservoir 25 that holds the displaced working fluid. In one embodiment, there are two flow paths within body cap 20 to move the fluid between chamber 325 and reservoir chamber 310, flow path 351 and flow path 315. Flow path 351 traverses between chamber 325 and reservoir chamber 310 via control orifice 308 of the poppet 305 and through the live valve 302. In contrast, flow path 315 is larger than flow path 351 and does not traverse either the poppet 305 or the live valve 302 as it passes through body cap 20 between chamber 325 and reservoir chamber 310.

In one embodiment, live valve 302 may be an active or semi active valve. In one embodiment, live valve 302 is manually controlled. In one embodiment, a switch or lever can be used to control live valve 302 while the shock assembly 100 is in use. In one embodiment, a cable is connected between the live valve 302 and a switch (or the like) to allow live valve 302 to be controlled from a remote location (e.g., a vehicle cab, bike handlebar, frame, etc.). In one embodiment, live valve 302 is wirelessly controlled by a controller, mobile device, sensor, or the like.

Although components of Figures 3 and 4, are shown in given locations in accordance with one embodiment, in other embodiments, one, some, or all of the components shown in Figures 3 and 4 could be inverted, located in other locations, one or more components could be separated into two or more pieces and dispersed, etc. The use of the locations of the components as shown in Figures 3 and 4 are indicative of one embodiment, which is provided for purposes of clarity.

With reference again to Figure 3, the live valve poppet assembly 80 is in the open state. That is, the spool 352 of the live valve 302 is set to the open position. When spool 352 is in the open position, the flow path 351 is open and allows fluid to flow from chamber 325 through control orifice 308 of the poppet 305, along chamber 331 of body cap 20, into the opening of the live valve 302, through the open fluid pathway 344, and into reservoir chamber 310. By allowing the fluid to flow along flow path 351, there is no pilot pressure on the back side of poppet 305 (e.g., the right side closer to the live valve 302).

Without any pilot pressure on the back side of poppet 305, the fluid flowing from chamber 325 will push against the front side of poppet 305 pushing it into its recessed or open position. In one embodiment, when in the open position, the fluid will be able to move unencumbered along flow path 315 within the body cap 20 as it moves between chamber 325 and reservoir chamber 310. As discussed herein, when in the open position, the poppet 305 will have little or no impact on the damping characteristics of the shock assembly 100.

With reference now to Figure 4, the live valve poppet assembly 80 is in the closed state. That is, the spool 352 of the live valve 302 is set to its closed position. When spool 352 is in its closed position, the flow path 351 is closed. As such, fluid will flow from chamber 325 through control orifice 308 of the poppet 305, along chamber 331 of body cap 20, and into the opening of the live valve 302. However, since fluid pathway 344 is blocked by spool 352, the fluid cannot move into reservoir chamber 310. As the fluid is unable to continue its flow, the pilot pressure will build on the back side of poppet 305 (e.g., the right side closer to the live valve 302). In other words, since the pressure area on the backside of poppet 305 is larger than the inlet area (e.g., control orifice 308), the building fluid pressure will push against the back side of poppet 305 pushing it into its closed (or firm) position.

When poppet 305 is in its closed (or firm) position it will block flow path 315. By blocking flow path 315, the working fluid will not be able to move from chamber 325 and into reservoir chamber 310. Instead, as discussed herein, the compression characteristics of the shock assembly 100 will be in a locked out state as long as the poppet 305 remains in the closed (or firm) position.

In one embodiment, poppet 305 includes a sealing feature 321 such as an O-ring, or the like. In one embodiment, the sealing feature 321 provides a fluid seal for the poppet 305. In one embodiment, the sealing feature 321 will provide a loose seal that can allow some amount of fluid to remain on chamber 331 of body cap 20 to allow the fluid to provide lubrication/reduce friction between the sealing feature 321 and body cap 20 to reduce any parasitic friction that occurs with respect to poppet 305 movement.

In one embodiment, a spring 333 is located between the poppet 305 and the surface 345. The spring 333 will provide a spring force to overcome the Bernoulli effect and/or any friction in the system, such as friction from sealing feature 321, parasitic friction, or the like, that would stop the poppet 305 from moving to its closed position.

In one embodiment, instead of (or in addition to) having an open and a firm setting, live valve poppet assembly 80 could provide a varying flow rate through flow path 315. In other words, poppet 305 would be partially opened or closed to meter the working fluid flow (e.g., control the rate of working fluid flow) to provide a different level of compression damping.

In one embodiment, there is a wired communication connection (such as via a wiring harness or the like) between one or more electronically actuated components, interactive components, and/or control features of shock assembly 100. For example, in one embodiment, live valve 302 is coupled with a user interface (and/or controller, sensors, and the like) via a wiring harness.

In one embodiment, power might also be received over the wired connection. For example, the motor (solenoid, or the like) that operates live valve 302 would receive its power from a power source coupled with the wiring harness. E.g., the vehicle, device, or the like power supply, a power supply incorporated with a user interface, a power supply coupled with shock assembly 100, a power supply coupled with another shock assembly (or smart component, etc.), a reserve or extra power supply for auxiliary components, or the like.

In one embodiment, there is wireless communication connectivity between the one or more electronically actuated components, interactive components, and/or control features of shock assembly 100. For example, in one embodiment, live valve 302 is in wireless communication with a user interface (and/or controller, sensors, and the like) without requiring a wiring harness. In one embodiment, shock assembly 100 would include its own power source and the motor (solenoid, or the like) that operates live valve 302 would receive its operating power therefrom. Thus, in one embodiment, the electronics of shock assembly 100 would be self-contained.

In one embodiment, the communications between one or more electronically actuated components, interactive components, and/or control features of shock assembly 100 is a combination of wired and wireless connectivity. For example, in one embodiment, shock assembly 100 may be in wireless communication with a user interface (and/or controller, sensors, and the like) and inputs received at live valve 302 would be received over the wireless connection. However, the motor (solenoid, or the like) that operates live valve 302 of shock assembly 100 would receive its power from a power source via a wiring harness. E.g., the vehicle, device, or the like power supply, a power supply incorporated with a user interface, a power supply coupled with shock assembly 100, a power supply coupled with another shock assembly (or smart component, etc.), a reserve or extra power supply for auxiliary components, or the like. In one embodiment, the motor (solenoid, or the like) that operates live valve 302 receives its power from its own power source.

In one embodiment, by offsetting the poppet 305 from the spool 352 of the live valve 302 (as compared to the co-located active valve 200), the new and novel live valve poppet assembly 80 configuration allows the offset poppet 305 to close a larger flow area (e.g., flow path 315) instead of only closing the smaller fluid pathway 344 through the live valve 302. As such, the volumetric flow rate from the shaft 11 will be able to move more efficiently into (and out of) reservoir 25.

In addition, since the poppet 305 is offset from the spool 352, there is no need for a differential area boost valve element clamping shims against a piston, or the like, to control the opening and or closing of poppet 305 (as used by co-located active valve 200). Thus, the new and novel live valve poppet assembly 80 will have fewer parts (as there is no boost valve element, shims, etc.), be amicable to different size constraints, and the like.

Moreover, in the new and novel live valve poppet assembly 80 the control orifice 308 is integrated into the clamping piece, e.g., poppet 305. That means that pressure drop across the control orifice 308 helps to keep the poppet 305 open. The result is close to zero damping when the live valve 302 is open.

The foregoing Description of Embodiments is not intended to be exhaustive or to limit the embodiments to the precise form described. Instead, example embodiments in this Description of Embodiments have been presented in order to enable persons of skill in the art to make and use embodiments of the described subject matter. Moreover, various embodiments have been described in various combinations. However, any two or more embodiments can be combined. Although some embodiments have been described in a language specific to structural features and/or methodological acts, it is to be understood that the subject matter defined in the appended claims is not necessarily limited to the specific features or acts described above. Rather, the specific features and acts described above are disclosed by way of illustration and as example forms of implementing the claims and their equivalents.

## Claims

1. A live valve assembly (80) comprising:
an active valve (302) within a first fluid pathway (351) between a damping chamber (325) and a reservoir (310), said active valve configured to enable or prevent a fluid flow through said first fluid pathway (351); and
a poppet (305) distinctly separate from said active valve (302), said poppet disposed in a second fluid pathway (315) between said damping chamber (325) and said reservoir (310), said second fluid pathway (315) larger than said first fluid pathway (351) and does not traverse said active valve (302), wherein said active valve is configured to close said first fluid pathway (351) and cause a fluid pressure increase to act against a portion of said poppet (305) to cause said poppet to close said second fluid pathway (315).

2. The live valve assembly of Claim 1, wherein said first fluid pathway (351) and said second fluid pathway (315) are in a body cap (20) of a shock assembly.

3. The live valve assembly of Claim 1 or 2, wherein said poppet (305) comprises a control orifice(308) through said poppet (305), said poppet adapted so that in use a pressure area on a backside of said poppet is larger than an inlet area of said control orifice (308).

4. The live valve assembly of Claim 3, wherein said first fluid pathway (351) traverses said control orifice (308) of said poppet (305).

5. The live valve assembly of Claim 3 or 4, wherein said second fluid (315) pathway does not traverse said control orifice of said poppet.

6. The live valve assembly of any of Claims 1 to 4, wherein said poppet comprises a sealing feature (321) to seal said poppet (305) with respect to a fluid chamber of said first fluid pathway (351).

7. The live valve assembly of any preceding Claim, further comprising a spring (333) to provide a closing force against said poppet (305).

8. The live valve assembly of Claim 7, wherein said closing force is selected from a group consisting of: a Bernoulli effect and a parasitic friction.

9. A shock assembly (100) comprising:
a body (12) comprising a chamber with a working fluid therein;
a piston coupled with a shaft (11), said piston disposed in said chamber and axially movable relative to said chamber, said piston separating said chamber into a compression side and a rebound side;
a body cap (20) comprising:
a first fluid pathway (351) between a damping chamber (325) and a reservoir (310); and
a second fluid pathway (315) between said damping chamber (325) and said reservoir (310), said second fluid pathway (315) larger than said first fluid pathway (351);
a live valve assembly (80) as claimed in any preceding Claim.

10. A shock assembly as claimed in Claim 9, in the form of a live valve shock assembly.

11. A vehicle comprising a live valve assembly as claimed in any of Claims 1 to 8.

12. A vehicle comprising a shock assembly as claimed in Claim 9 or 10.

13. A vehicle as claimed in Claim 11 or 12, wherein the vehicle comprises a bicycle, an electric bike (e-bike), a hybrid bike, a scooter, a motorcycle, an ATV, a personal water craft (PWC), a vehicle with three or more wheels, such as a utility vehicle (UTV) such as a side-by-side, a car, truck, a snow machine, an aircraft.

14. A suspension inclusive device comprising a live valve assembly as claimed in any of Claims 1 to 8.

15. A suspension-inclusive device as claimed in Claim 14, wherein said suspension-inclusive device comprises an exoskeleton, a seat frame, a prosthetic, or a suspended floor.
